# EUROPEAN PATENT SPECIFICATION

(11) **EP 0 663 575 B1**
(45) Date of publication and mention of the grant of the patent: **12.04.2000**
(21) Application number: 94200078.7
(22) Date of filing: 13.01.1994
(51) Int. Cl.: F24H 1/00, F02G 5/00, F24D 12/02

(54) **Control for operating boilers and devices for generating heat and power**
Regelung zum Betrieb von Kesseln und Geräte zur Erzeugung von Wärme und Kraft
Commande pour l'opération des chaudières et dispositifs pour la production de chaleur et d'énergie

(43) Date of publication of application: 19.07.1995
(73) Proprietor: N.V. Kema, 6812 AR Arnhem (NL)
(72) Inventor: Tazelaar, Edwin, NL-4335 BJ Middelburg (NL)
(74) Representative: Eveleens Maarse, Pieter

(56) References cited:
- EP-A- 0 286 377
- GB-A- 2 206 708
- US-A- 4 337 893
- US-A- 4 752 697

## Description

The invention relates to an installation for heating water circulating in a circuit comprising:
- at least one water heating device of the first type;
- at least one water heating device of the second type adapted for co-generating mechanical power simultaneously with heating of the water,
- a control device for controlling the power of the water heating devices of the first and the second types, comprising:
   * input means for input of the desired power; and
   * operation determining means for determining the operation of the water heating devices of the second type on the basis of the desired power.

Such installations are generally known. Water heating installations of the first type are generally known as boilers. Water heating devices of the second type are generally known as combined heat and power installations. Control of the relevant water heating devices generally takes place on the basis of a water temperature.

The water temperature is however not a suitable quantity for controlling the operation of the water heating devices. There is after all a heat requirement, the extent of which cannot be determined by measuring the temperature.

Known from the journal article "Control strategy for heat and electrical power units and boilers" Energietechniek 6, vol. 71, (June) 1993 is such an installation which is provided with a control device for controlling the power of the water heating devices, comprising:
* input means for input of the desired power; and
* operation determining means for determining the operation of the water heating devices of the second type on the basis of the desired power.

Such a known device results in a good control of the operation of the water heating units, although practical experience has shown that the water heating devices of the second type which are adapted for co-generating mechanical power simultaneously with heating of the water, also known as heat and electrical power installations, are switched on and off frequently.

Precisely for the combination of generating mechanical power and heating of water such a dynamic behaviour is highly undesired; frequent switching on and off results in frequent temperature gradients which have an adverse effect on the lifespan of the device and which reduce performance partly as a result of warm-up and cooling times.

The object of the present invention is to provide such an installation wherein the control is adapted such that frequent switching on and off is avoided.

This object is achieved in that the operation determining means are adapted for setting the heating devices of the first type into operation such that the realized power is smaller than or equal to the desired power and for only setting the heating device of the second type into operation when the desired power is greater than a factor times the nominal power of the device of the second type.

US-A-4 337 893 describes an installation for heating water wherein a number of heating units is switched on dependent on the magnitude of the difference between a reference temperature and the actual temperature, but wherein the water temperature is not used to determine the number of heating units to be switched on.

In the control of the prior art, when a water heating unit of the second type, that is, a heat and electrical power unit, is used as basis, the rest of the required power is generated by the water heating units of the first type. For controlling the water heating unit of the second type use is usually made of the temperature control. As a result there is the danger that the water heating devices of the first type generate too large a part of the heat and that the water heating devices of the second type are "pushed away". This problem is avoided with the invention.

The invention likewise relates to a method for operating an installation for heating water circulating in a circuit, comprising:
- at least one water heating device of the first type;
- at least one water heating device of the second type adapted for generating mechanical power simultaneously with heating of the water; and
- a control device for controlling the power of the water heating device wherein a water heating device of the second type is only set into operation only when the desired power is greater than a factor times the nominal power of the heating device of the second type.

The starting point for the factor is a heating device of the second type which can only operate at full load and not at partial load. It is however equally possible to make use of water heating devices which can also operate in a partial load situation, for instance at 70% of the nominal power. In such a situation the operation determining means are adapted for switching on the heating device of the second type when the required power is greater than a factor times the minimum power of the heating device of the second type.

Envisaged in the first instance is a factor equal to 1; this implies that the water heating device of the second type is only switched on when the required power is equal to or greater than the relevant minimal power or nominal power.

In situations where large fluctuations in the heat requirement are expected it is well-advised to choose a factor greater than 1; that is, the relevant water heating device is only switched on when the required nominal power exceeds the minimum power with a determined percentage, so that at a subsequent decrease in the required power the relevant water heating device does not have to be switched off immediately. This also results in a reduction in the number of switch-ons and switch-offs.

According to a preferred embodiment of the invention the operation determining means are adapted for determining the operation of the water heating device on the basis of the difference between the desired and the realized power and the control device further comprises:
- power determining means for determining the power realized by the installation; and
- computer means for calculating the power difference between the desired power and the realized power. It should be noted here that as a result of the feedback the effect of the inaccuracy in the detectors on the end result is reduced. Feedback is otherwise only possible if a suitable feedback quantity is available, such as in the present case the power.

The present invention will subsequently be elucidated with reference to the annexed drawings, in which:

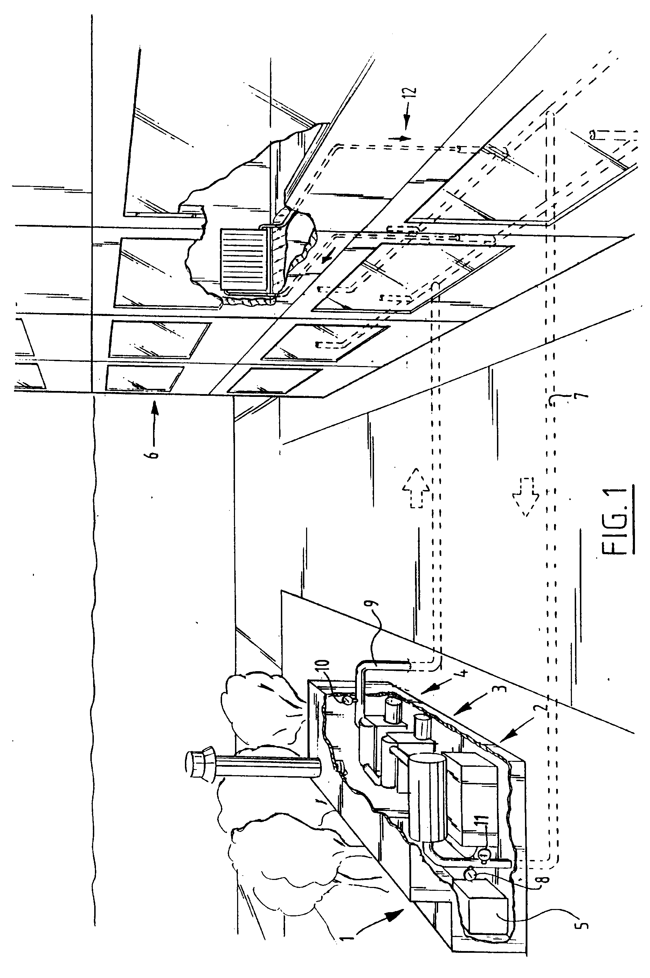

figure 1 shows a partly broken away perspective view of the mechanical components of a device according to the invention;
figure 2 shows a diagram of the control system for use in the device according to the invention; and
figure 3 shows an operational graph which can be applied with the device according to the invention.

The device according to the invention comprises a boiler housing 1 in which is arranged a water heating device of the first type 2 in addition to two water heating devices of the second type 3,4.

The water heating device 2 is only adapted for heating water, while the water heating devices 3,4 of the second type are adapted for generating mechanical power simultaneously with heating of water.

This mechanical power is used in the present case for driving generators coupled to the water heating devices. The thus generated electricity is fed back to the national grid system.

It is also possible however to use the relevant mechanical power for a production process, for instance for driving processing machines.

For controlling of the heating devices 2,3,4 arranged in the boiler housing 1 a control device 5 is arranged in boiler housing 1. This is formed by a computer.

The water heated by heating devices 2,3,4 is used to heat a building 6 where the generated heat is used for room heating; it is likewise possible to use the thus generated heat to heat mains water or to use the heated water, perhaps in the form of steam, to carry out industrial processes, for instance in an oil refinery or a chemical plant.

The water for heating is supplied through a return pipe 7 to the boiler housing 1, wherein a thermometer 8 and a flow meter 11 are arranged in advance of the first water heating device. The heated water leaves the boiler housing via a feed pipe 9 in which is arranged a thermometer 10. It is however equally possible to arrange the flow meter 11 in the feed pipe.

The feed pipe 9 is joined to the network 12 arranged in building 6 for distributing the heated water and draining the water that has delivered its heat. The relevant water is fed again to the return pipe 7 from the network 12.

A circuit of water thus results.

The measurement signals of both thermometers 8,10 and the flow meter 11 are fed to the control device 5. From the relevant signals the control device calculates the amount of heat produced.

The control device also receives from a relevant input means a signal which is a measure for the desired amount of heat to be produced. This signal can herein originate from the users or can be formed by a statistically determined signal formulated on the basis of the weather forecast.

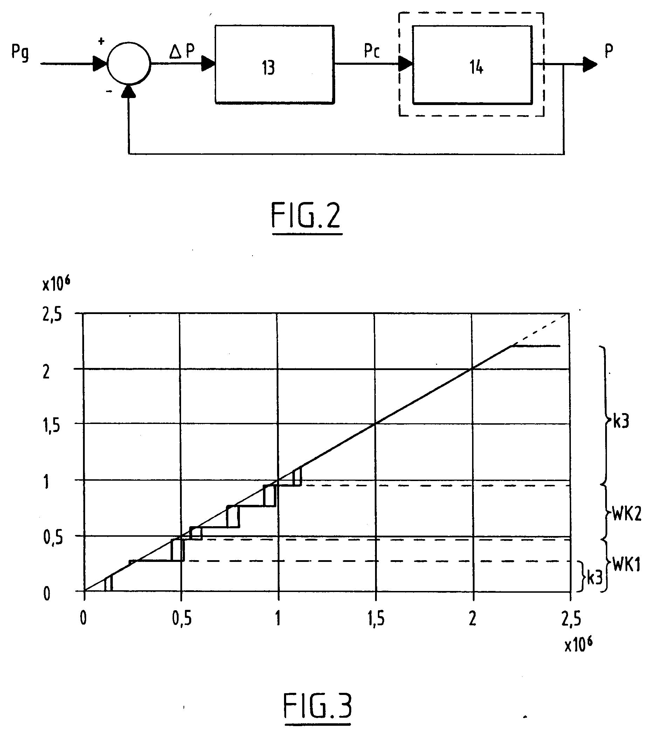

The relevant configuration is shown schematically in figure 2. Herein Pg shows the signal representing the desired power to be produced, and the signal P represents the produced power. Both these signals are subtracted from each other as is usual in a classical control loop, while the resulting difference ΔP is fed to a control unit 13 which calculates the required power Pc. On the basis of the required power Pc the setting into operation of the separate water heating units 2,3,4 is determined with reference for instance to the operational graph shown in figure 3. Block 14 represents the actual process.

Shown in figure 3 is an example of an operational graph as applied in a control device according to the present invention. The operational graph depicted in figure 3 shows the required power Pc along the x-axis and the applied power Pin along the y-axis. With disturbance-free operation the applied power corresponds with the produced power.

It is initially noted that the water heating devices of the first type can generally operate well under partial load and can be controlled well within the partial load range, while water heating devices of the second type can generally only operate under full load or, in some cases under a predetermined partial load. When there is an increase in the required power this is supplemented by the relevant water heating device.

Starting with a required power of 0 it is found that initially none of the units is switched on; only at a power of circa 0.2 MW is a water heating device of the first type K3 switched on to the relevant power.

It should be noted here that the water heating device of the first type can generally operate well under partial load and can be controlled well within the partial load range, while water heating devices of the second type can generally only operate under full load or, in some cases under a predetermined partial load. When there is a rise in required power this is supplemented by the relevant water heating device.

At a power of circa 0.3 MW the relevant water heating of the first type is switched off and the first water heating device of the second type (WK1) is switched on.

With a rising required power the initial partial load level of the water heating device of the second type (WK1) is maintained until the required level corresponds with the nominal power of WK1 and WK1 is fully switched on.

In addition, when the power rises again WK2 is then switched on at a partial load and WK1 changes down from full load to partial load. The partial load of WK1 is then increased to the full load and finally WK2 is fully switched on.

When the power rises still further K3, the water heating device of the first type, is switched on again. This is continued until maximum power has been reached.

When power is decreased the control is found to display a certain degree of hysteresis between the switching on and off of the relevant heat and electrical power units; when there is a fall in required power switch-off takes place at a lower required power than switch-on takes place when power is rising. In some situations the required power is then exceeded.

This step is however not per se necessary to the present invention, although switch-on and switch-off behaviour is greatly enhanced thereby.

## Claims

1. Installation for heating water circulating in a circuit comprising:
- at least one water heating device of the first type (2);
- at least one water heating device of the second type (3,4) adapted for co-generating mechanical power simultaneously with heating of the water,
- a control device (5) for controlling the power of the water heating devices of the first (2) and the second (3,4) types, comprising:
* input means for input of the desired power; and
* operation determining means for determining the operation of the water heating devices of the second type (3,4) on the basis of the desired power,
**characterized in that** the operation determining means are adapted for setting the heating devices of the first type (2) into operation such that the realized power is smaller than or equal to the desired power and for only setting the heating device of the second type (3,4) into operation when the desired power is greater than a factor times the nominal power of the device of the second type (3,4).

2. Installation as claimed in claim 1,
**characterized in that**
- the control device (5) further comprises:
* power determining means (8,10,11) for determining the power realized by the installation; and
* computer means for calculating the power difference between the desired power and the realized power;
- and that the operation determining means are adapted for determining the operation of the water heating device on the basis of the difference in power.

3. Installation as claimed in claim 1 or 2,
**characterized in that** the operation determining means are adapted for switching on the heating device of the second type (3,4) when the required power is greater than a factor times the minimal power of the heating device of the second type (3,4).

4. Installation as claimed in claim 1, 2 or 3, **characterized in that** the factor is equal to or greater than 1.

5. Installation as claimed in claim 1 or 2, wherein the installation comprises at least two heating devices of the second type (3,4), **characterized in that** the installation is adapted for initially switching on one of the heating devices of the second type (3,4) when the required power exceeds the nominal power of the relevant heating device with factor greater than or equal to 1.

6. Installation as claimed in claim 5, wherein both heating devices of the second type have an unequal nominal power, **characterized in that** the determining means is adapted for initially switching on the heating device of the second type (3,4) with the smallest nominal power.

7. Installation as claimed in any of the foregoing claims, **characterized in that** switch-on of a heating device takes place at a higher required power than switch-off of the water heating unit.

8. Installation as claimed in any of the foregoing claims, **characterized in that** the operation determining means are adapted for switching off the heating device of the second type (3,4) after the required power has understepped the nominal power of the heating device of the second type (3,4) for a predetermined time duration.

9. Installation as claimed in any of the claims 1-8, **characterized in that** the control device comprises a low-pass filter (13).

10. Control device for use in an installation as claimed in any of the claims 1-9.

11. Method for operating an installation for heating water circulating in a circuit, comprising:
- at least one water heating device of the first type (2);
- at least one water heating device of the second type (3,4) adapted for co-generating mechanical power simultaneously with heating of the water; and
- a control device (5) for controlling the power of the water heating devices of the first (2) and the second types (3,4),
**characterized by** only setting into operation a water heating device of the second type (3,4) only when the desired power is greater than a factor times the nominal power of the heating device of the second type (3,4).

## Patentansprüche

1. Anlage zum Erwärmen von Wasser, das in einem Kreislauf zirkuliert, mit:
- mindestens einer Wasserheizvorrichtung der ersten Art (2);
- mindestens einer Wasserheizvorrichtung der zweiten Art (3, 4), die zum gemeinsamen Erzeugen von mechanischer Leistung gleichzeitig mit dem Erwärmen des Wassers ausgelegt ist;
- einer Steuereinrichtung (5) zum steuern der Leistung der Wasserheizvorrichtungen der ersten (2) und der zweiten (3, 4) Art mit:
* einem Eingabemittel zum Eingeben der gewünschten Leistung und
* Betriebsbestimmungsmitteln zum Bestimmen des Betriebes der Wasserheizvorrichtungen der zweiten Art (3, 4) auf der Grundlage der gewünschten Leistung;
dadurch gekennzeichnet,
daß die Betriebsbestimmungsmittel ausgelegt sind zum Inbetriebsetzen der Heizvorrichtung der ersten Art (2) derart, daß die realisierte Leistung kleiner als oder gleich der gewünschten Leistung ist, und nur zum Inbetriebsetzen der Heizvorrichtung der zweiten Art (3, 4), wenn die gewünschte Leistung größer als ein Faktor multipliziert mit der Nennleistung der Vorrichtung der zweiten Art (3, 4) ist.

2. Anlage nach Anspruch 1,
dadurch gekennzeichnet, daß
- die Steuereinrichtung (5) weiter aufweist:
* ein Leistungsbestimmungsmittel (8, 10, 11) zum Bestimmen der durch die Anlage realisierten Leistung und
* ein Computermittel zum Berechnen der Leistungsdifferenz zwischen der gewünschten Leistung und der realisierten Leistung;
- und daß die Betriebsbestimmungsmittel ausgelegt sind zum Bestimmen des Betriebes der Wasserheizvorrichtung auf der Grundlage der Leistungsdifferenz.

3. Anlage nach Anspruch 1 oder 2,
dadurch gekennzeichnet, daß die Betriebsbestimmungsmittel ausgelegt sind zum Schalten der Heizvorrichtung der zweiten Art (3, 4), wenn die gewünschte Leistung größer als ein Faktor multipliziert mit der minimalen Leistung der Heizvorrichtung der zweiten Art (3, 4) ist.

4. Anlage nach Anspruch 1, 2 oder 3,
dadurch gekennzeichnet, daß der Faktor gleich oder größer als 1 ist.

5. Anlage nach Anspruch 1 oder 2,
bei der die Anlage mindestens zwei Heizvorrichtungen der zweiten Art (3, 4) aufweist,
dadurch gekennzeichnet, daß die Anlage ausgelegt ist zum anfänglichen Einschalten einer der Heizvorrichtungen der zweiten Art (3, 4), wenn die gewünschte Leistung die Nennleistung der relevanten Heizvorrichtung mit einem Faktor größer als oder gleich 1 überschreitet.

6. Anlage nach Anspruch 5,
bei der beide Heizvorrichtungen der zweiten Art ungleiche Nennleistungen aufweisen,
dadurch gekennzeichnet, daß das Bestimmungsmittel ausgelegt ist zum anfänglichen Einschalten der Heizvorrichtung der zweiten Art (3, 4) mit der kleinsten Nennleistung.

7. Anlage nach einem der vorhergehenden Ansprüche,
dadurch gekennzeichnet, daß das Einschalten einer Heizvorrichtung bei einer höheren gewünschten Leistung als das Abschalten der Wasserheizeinheit stattfindet.

8. Anlage nach einem der vorhergehenden Ansprüche,
dadurch gekennzeichnet, daS die Betriebsbestimmungsmittel ausgelegt sind zum Abschalten der Heizvorrichtung der zweiten Art (3, 4), nachdem die gewünschte Leistung die Nennleistung der Heizvorrichtung der zweiten Art (3, 4) während einer vorbestimmten Zeitdauer unterschritten hat.

9. Anlage nach einem Ansprüche 1 bis 8,
dadurch gekennzeichnet, daß die Steuereinrichtung einen Tiefpaßfilter (13) aufweist.

10. Steuereinrichtung zur Benutzung in einer Anlage, wie sie in einem der Ansprüche 1 bis 9 beansprucht ist.

11. Verfahren zum Betreiben einer Anlage zum Erwärmen von Wasser, das in einem Kreislauf zirkuliert, mit:
- mindestens einer Wasserheizvorrichtung der ersten Art (2);
- mindestens einer Wasserheizvorrichtung der zweiten Art (3, 4), die zum gemeinsamen Erzeugen von mechanischer Leistung gleichzeitig mit dem Erwärmen des Wassers ausgelegt ist; und
- einer Steuereinrichtung (5) zum Steuern der Leistung der Wasserheizvorrichtungen der ersten (2) und der zweiten (3, 4) Art,
gekennzeichnet durch nur Inbetriebsetzen einer Wasserheizvorrichtung der zweiten Art (3, 4), nur wenn die gewünschte Leistung größer als ein Faktor multipliziert mit der Nennleistung der Heizvorrichtung der zweiten Art (3, 4) ist.

## Revendications

1. Installation pour chauffer de l'eau circulant dans un circuit, comprenant :
- au moins un dispositif de production d'eau chaude du premier type (2) ;
- au moins un dispositif de production d'eau chaude du second type (3,4) apte à générer conjointement une puissance mécanique en même temps que s'effectue le chauffage de l'eau,
- un dispositif de commande (5) pour commander la puissance des dispositifs de production d'eau chaude du premier type (2) et du second type (3,4), comprenant :
* des moyens d'entrée pour introduire la puissance désirée ; et
* des moyens de détermination de fonctionnement pour déterminer le fonctionnement des dispositifs de production d'eau chaude du second type (3,4) sur la base de la puissance désirée ;
caractérisée en ce que les moyens de détermination de fonctionnement sont adaptés pour faire fonctionner les dispositifs de chauffage du premier type (2) de telle sorte que la puissance absorbée est inférieure ou égale à la puissance désirée et pour faire fonctionner uniquement le dispositif de chauffage du second type (3,4) lorsque la puissance désirée est supérieure à un facteur multiplicatif de la puissance nominale du dispositif du second type (3,4).

2. Installation selon la revendication 1, caractérisée en ce que
- le dispositif de commande (5) comprend en outre:
* des moyens de détermination de puissance (8,10, 11) pour déterminer la puissance absorbée par l'installation ; et
* des moyens formant ordinateur pour calculer la différence de puissance entre la puissance désirée et la puissance absorbée ;
- et que les moyens de détermination de fonctionnement sont adaptés pour déterminer le fonctionnement du dispositif de chauffage sur la base de la différence de puissance.

3. Installation selon la revendication 1 ou 2, caractérisée en ce que les moyens de détermination de fonctionnement sont adaptés pour brancher le dispositif de chauffage du second type (3,4) lorsque la puissance requise est supérieure à un facteur multiplicatif de la puissance minimale du dispositif de chauffage du second type (3,4).

4. Installation selon la revendication 1, 2 ou 3, caractérisée en ce que le facteur est égal ou supérieur à 1.

5. Installation selon la revendication 1 ou 2, dans laquelle l'installation comprend au moins deux dispositifs de chauffage du second type (3,4), caractérisée en ce que l'installation est adaptée pour brancher initialement l'un des dispositifs de chauffage du second type (3,4) lorsque la puissance requise dépasse la puissance nominale du dispositif de chauffage concerné avec un facteur supérieur ou égal à 1.

6. Installation selon la revendication 5, dans laquelle les deux dispositifs de chauffage du second type possèdent des puissances nominales différentes, caractérisée en ce que les moyens de détermination sont adaptés pour brancher initialement le dispositif de chauffage du second type (3,4) avec la puissance nominale la plus faible.

7. Installation selon l'une quelconque des revendications précédentes, caractérisée en ce que le branchement d'un dispositif de chauffage s'effectue pour une puissance requise plus élevée que pour le débranchement de l'unité de production d'eau chaude.

8. Installation selon l'une quelconque des revendications précédentes, caractérisée en ce que les moyens de détermination de fonctionnement sont adaptés pour débrancher le dispositif de chauffage du second type (3,4) après que la puissance requise est tombée au-dessous de la puissance nominale du dispositif de chauffage du second type (3,4) pendant un intervalle de temps prédéterminé.

9. Installation selon l'une quelconque des revendications 1-8, caractérisée en ce que le dispositif de commande comprend un filtre passe-bas (13).

10. Dispositif de commande destiné à être utilisé dans une installation selon l'une quelconque des revendications 1-9.

11. Procédé pour faire fonctionner l'installation pour chauffer de l'eau circulant dans un circuit, comprenant :
- au moins un dispositif de production d'eau chaude du premier type (2);
- au moins un dispositif de production d'eau chaude du second type (3,4) adapté pour générer conjointement une puissance mécanique tout en chauffant simultanément l'eau;
- un dispositif de commande (5) pour commander la puissance des dispositifs de production d'eau chaude du premier type (2) et du second type (3,4),
caractérisé par la mise en fonctionnement uniquement d'un dispositif de production d'eau chaude du second type (3,4) uniquement lorsque la puissance désirée est supérieure a un facteur multiplicatif de la puissance nominale du dispositif de production d'eau chaude du second type (3,4).
